# EUROPÄISCHE PATENTANMELDUNG

(11) **EP 3 147 672 A1**
(43) Veröffentlichungstag der Anmeldung: **29.03.2017**
(21) Anmeldenummer: 15186218.2
(22) Anmeldetag: 22.09.2015
(51) Int. Cl.: G01P 3/481, G01P 3/488, G01P 3/56, G01P 3/60

(54) **VERFAHREN UND ANORDNUNG ZUM ERMITTELN DER GESCHWINDIGKEIT UND DER WINKEL ZWEIER WELLEN**

(71) Anmelder: Siemens Aktiengesellschaft, 80333 München (DE)
(72) Erfinder: DÄNNER, Mirko, 42549 Velbert (DE); ZIMMER, Gerta, 45468 Mülheim an der Ruhr (DE)

(57) **Zusammenfassung**

Die Erfindung betrifft eine Anordnung (9) zur Ermittlung der Rotationsgeschwindigkeit einer Welle und der Differenzgeschwindigkeit und Differenz-Winkellage zwischen einer ersten Welle (1) und einer zweiten Welle (3). Auf jeder Welle werden symmetrisch mehrere Markierungen (6) auf der Wellenoberfläche angebracht, zusätzlich jeweils eine Referenzmarkierung (10) bzw. (11), die jeweils asymmetrisch angeordnet ist. Durch die Verwendung mehrerer Markierungen können pro Umdrehung mehrere Messwerte generiert werden. Die Sensorsignale werden analysiert, um die Rotationsgeschwindigkeit, die Differenzgeschwindigkeit und den Differenzwinkel zu bestimmen.

## Beschreibung

Die Erfindung betrifft eine Anordnung zur Ermittlung eines Winkels und einer Differenz-Geschwindigkeit einer ersten Welle.

Desweiteren betrifft die Erfindung ein Verfahren zur Ermittlung der Differenz-Geschwindigkeit und des Winkels zwischen einer ersten und zweiten Welle.

Strömungsmaschinen wie z. B. Dampfturbinen umfassen ein Gehäuse und innerhalb des Gehäuses eine drehbar gelagerte Welle. In der Regel sind mehrere Wellen vorhanden, die drehmomentübertragend miteinander gekoppelt werden müssen. Die nicht starre Kopplung der Wellen, insbesondere bei Dampfturbinen sollte nicht willkürlich erfolgen, sondern sollte bei einem bestimmten Zielwinkel (Differenzwinkel zwischen zwei Wellen) erfolgen. Eine Kopplung bei ungünstigen Winkeln könnte zu unerwünschten Schwingungen der Dampfturbine führen.

Es ist somit erforderlich den Winkel und die Differenzgeschwindigkeit zwischen den Wellen zu ermitteln. Über eine geeignete Regelung der Beschleunigung der Antriebsseite kann dann der Zielwinkel bei Drehzahlgleichheit angesteuert werden. Es sind Messgeräte bekannt, mit denen es möglich ist, die Relativgeschwindigkeit zwischen sich drehenden Wellen und dem Differenzwinkel zu messen. Das Messverfahren basiert auf einer Pulszählung zwischen dem Passieren der Nuten auf beiden Wellen. Dabei hat jede Welle je eine Nut.

Für eine Messung wird ein Update der Messwerte drehzahlabhängig durchgeführt und erfolgt dabei einmal pro Umdrehung. Bei einer Frequenz von 50Hz der Welle erfolgt solch ein Update alle 20ms.

Wenn ein winkelgeregeltes Einkuppeln zwischen zwei Wellen bei deutlich niedrigeren Drehzahlen wie beispielsweise zwischen 360U/min und 480U/min, was einer Frequenz von 6Hz bis 8Hz entspricht, sind die Abtastzeiten vergleichsweise groß. Bei einer Frequenz von 6Hz wäre die Abtastzeit 166,67ms. Das dabei resultierende Update der Messwerte dauert dadurch bei dieser Drehzahl deutlich länger.

Die Erfindung hat es sich zur Aufgabe gemacht, die Geschwindigkeit und den Differenzwinkel zwischen zwei zu koppelnden Wellen auch bei niedrigen Drehzahlen ermitteln zu können.

Gelöst wird dies durch eine Anordnung zur Ermittlung einer Geschwindigkeit einer ersten Welle, wobei auf der ersten Welle zumindest zwei Mittel angeordnet sind, die mit einem Messmittel derart wechselwirken, dass ein Signal im Messmittel entsteht, wenn das Mittel am Messmittel vorbeibewegt wird.

Die Erfindung verfolgt damit den Ansatz, statt eines Mittels mehrere Mittel einzusetzen. Dadurch würde bei einer niedrigen Drehzahl ein Mittel häufiger am Messmittel vorbeibewegen und ein Messsignal erfolgen.

Weiterhin müssen auch auf der zweiten Welle mehrere Mittel angebracht werden, um die Abtastrate der Messung der Differenzgeschwindigkeit und des Differenzwinkels zwischen den beiden Wellen zu erhöhen.

Somit wird erfindungsgemäß vorgeschlagen die drehzahlabhängige Abtastrate zu erhöhen, in dem die Anzahl der Mittel auf den jeweiligen Wellen erhöht wird. Eine Vervierfachung würde beispielsweise zu einer Reduktion der Abtastzeit auf ein Viertel bedeuten. Bei einer Drehfrequenz von 6Hz würde sich dadurch die Abtastzeit von 166,67ms auf 41,67ms reduzieren.

Vorteilhafte Weiterbildungen sind in den Unteransprüchen angegeben.

In einer vorteilhaften Weiterbildung sind vier Mittel auf der ersten Welle in der 12-Uhr-, 3-Uhr-, 6-Uhr- und 9-Uhr-Position angeordnet, wobei ein weiteres Positionsmittel zwischen zwei Mitteln angeordnet ist. Diese Mittel können sowohl auf der ersten Welle als auch auf der zweiten Welle angeordnet werden. Bei dieser vorteilhaften Weitergestaltung der Erfindung kann das Mittel gleichmäßig auf den Umfang verteilt werden. Zusätzlich zu den vier Mitteln wird das Positionsmittel zwischen zwei Mitteln angebracht. Dieses weitere Positionsmittel kann als asymmetrisch angebrachtes Zusatzmittel bezeichnet werden. Durch dieses weitere Positionsmittel lässt sich die Lage der Welle festlegen, denn zwei verkürzte Zeitintervalle zwischen dem Passieren von zwei Mitteln führen zu einer eindeutigen Identifikation der Lage des weiteren Positionsmittels. Somit resultieren dann relativ zu der Zeit, die von den symmetrisch verteilten Mitteln benötigt wird, zwei verkürzte Zeitintervalle, die sich aus dem Passieren des Zusatzmittels und des nachfolgenden Mittels der symmetrischen Verteilung ergeben. Aus der daraus resultierenden Pulszahl lässt sich der Bezug zu einem Nullwinkel herstellen.

Das gleiche Prinzip wird auf die Anordnung der Mittel auf der zweiten Welle angewendet. Hier kann dann die Differenzgeschwindigkeit und der Differenzwinkel mit analog erhöhter Abtastfrequenz ermittelt werden. Das jeweils symmetrisch angeordnete Mittel dient zur Erstellung eines Bezugspunktes (Nullpunkt) der Winkellage zwischen den beiden Wellen.

Vorteilhafterweise sind die Mittel als Nuten auf der Wellenoberfläche ausgebildet.

Vorteilhafterweise ist eine Nut tiefer gebohrt als die anderen Nuten. Dadurch kann das Schwingungs-Analyse-System auf diese Nut entsprechend eingestellt werden.

Die Erfindung verfolgt ebenso den Aspekt, dass die Mittel nicht zwingend symmetrisch angeordnet werden müssen, eine asymmetrisch bzw. anders angebrachte Anordnung der Mittel ist denkbar. Es muss lediglich die Software bei anders angeordneten Mitteln angepasst werden.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Gleiche Bauteile oder Bauteile mit gleicher Funktion sind dabei mit gleichen Bezugszeichen gekennzeichnet.

Ausführungsbeispiele der Erfindung werden nachfolgend anhand der Zeichnungen beschrieben. Diese soll die Ausführungsbeispiele nicht maßgeblich darstellen, vielmehr ist die Zeichnung, wozu Erläuterungen dienlich, in schematisierter und/oder leicht verzerrter Form ausgeführt. Im Hinblick auf Ergänzungen der in der Zeichnung unmittelbar erkennbaren Lehren, wird auf den einschlägigen Stand der Technik verwiesen.

Es zeigen
- Figur 1: eine Anordnung gemäß dem Stand der Technik,
- Figur 2: eine erfindungsgemäße Anordnung.

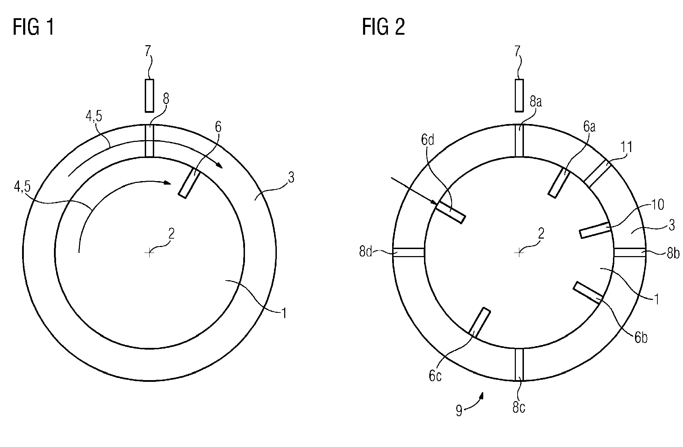

Figur 1 zeigt eine erste Welle 1, die um eine Rotationsachse 2 drehbar gelagert ist. In Richtung der Rotationsachse 2 gesehen ist eine zweite Welle 3 dahinter angeordnet. Aus Gründen der Übersichtlichkeit ist der Durchmesser der zweiten Welle ein wenig größer als der Durchmesser der ersten Welle 1. Die Rotationsrichtung 4 der ersten Welle 1 und der zweiten Welle 3 wird durch Pfeile 5 gekennzeichnet. In der in der Figur 1 gewählten Ausführungsform zeigt die Rotationsrichtung in Uhrzeigersinn.

Die erste Welle 1 weist ein Mittel 6, das mit einem Messmittel 7 derart wechselwirkt, dass ein Signal im Messmittel 7 entsteht, wenn das Mittel 6 am Messmittel 7 vorbeibewegt wird. Bei einer Frequenz von 50Hz erfolgt dies alle 20ms. Die zweite Welle 3 weist ebenfalls ein Mittel 8 auf, das ebenso mit dem Messmittel 7 wechselwirkt und zu einem Signal führt. Das Mittel 6 und das Mittel 8 sind als Nut auf der Wellenoberfläche ausgebildet. Das Messmittel 7 ist als Key Phaser ausgebildet.

Die Figur 2 zeigt eine erfindungsgemäße Anordnung 9. Die Anordnung 9 umfasst nunmehr vier symmetrisch zueinander angeordnete Mittel 6a, 6b, 6c und 6d. Die Mittel 6a, 6b, 6c und 6d sind symmetrisch zueinander um 90° versetzt auf der Wellenoberfläche angeordnet. Zwischen dem Mittel 6a und dem Mittel 6b ist ein Positionsmittel 10 angeordnet. Mit dem Positionsmittel 10 lässt sich ein Signal im Messmittel 7 erzeugen, das die Lage der ersten Welle eindeutig definiert.

Bei niedrigeren Drehzahlen der ersten Welle 1 werden somit mehrere Signale im Messmittel 7 erzeugt.

Die Mittel 6a, 6b, 6c und 6d sowie das Positionsmittel 10 werden als Nuten auf der Wellenoberfläche ausgebildet. Eine Nut wird etwas tiefer gebohrt als die anderen Nuten, damit das Schwingungs-Analyse-System auf diese Nut entsprechend eingestellt werden kann. Das Tieferbohren einer Nut ist alternativ zu dem Anbringen der asymmetrischen Nut zu verstehen. In der Figur 2 ist dies beim Mittel 6d dargestellt, das etwas tiefer gebohrt ist als die anderen Mittel 6a, 6b und 6c.

Die zweite Welle 3 umfasst ebenso symmetrisch zueinander angeordnete Mittel 8a, 8b, 8c und 8d. Wie bei der ersten Welle 1 sind die Mittel 8a, 8b, 8c und 8d symmetrisch zueinander um einen Winkel 90° zueinander angeordnet. Zwischen dem Mittel 8a und dem Mittel 8b ist ein Zusatz-Positionsmittel 11 angeordnet. Die Mittel 8a, 8b, 8c und 8d sind als Nuten auf der Wellenoberfläche ausgebildet. Das Zusatz-Positionsmittel 11 ist ebenfalls als Nut auf der Wellenoberfläche ausgebildet. Das als Nut ausgebildete Mittel 8c ist etwas tiefer gebohrt als alle anderen Nuten 8b, 8a und 8d, damit das Schwingungs-Analyse-System auf diese Nut entsprechend eingestellt werden kann.

Durch die asymmetrische Anordnung des Zusatz-Positionsmittels 11 ist eine eindeutige Definition des Winkels zwischen der ersten und der zweiten Welle möglich. Eine entsprechende Auswertung der Signale im Messmittel 7, der als Key Phaser ausgebildet ist, lässt sich die Rotationsgeschwindigkeit der ersten Welle 1 und der zweiten Welle 3 bestimmen.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Anordnung (9) zur Ermittlung einer Geschwindigkeit einer ersten Welle (1),
wobei auf der ersten Welle (1) zumindest zwei Mittel (6) angeordnet sind,
die mit einem Messmittel (7) derart wechselwirken, dass ein Signal im Messmittel (7) entsteht, wenn das Mittel (6) am Messmittel (7) vorbei bewegt wird.

2. Anordnung (9) nach Anspruch 1,
ferner ausgebildet zum Ermitteln eines Winkels zwischen einer ersten Welle (1) und einer zweiten Welle (3).

3. Anordnung (9) nach Anspruch 1 oder 2,
wobei vier Mittel auf der ersten Welle (1) in der 12-, 3-, 6-, 9-Uhr-Position angeordnet sind,
wobei ein weiteres Positionsmittel (10) zwischen zwei Mitteln (6) angeordnet ist.

4. Anordnung (9) nach Anspruch 3,
wobei das Positionsmittel (10) in der Mittel zwischen zwei Mitteln (6) angeordnet ist.

5. Anordnung (9) nach Anspruch 1, 2 oder 3,
wobei die Mittel (6) und das Positionsmittel (19) als Nuten auf der Wellenoberfläche ausgebildet sind.

6. Anordnung (9) nach Anspruch 5,
wobei eine Nut tiefer gefräßt ist als die anderen Nuten.

7. Anordnung (9) nach einem der vorhergehenden Ansprüche,
wobei das Messmittel (7) als ein Key Phaser ausgebildet ist.

8. Anordnung (9) nach einem der vorhergehenden Ansprüche,
wobei eine zur ersten Welle (1) benachbart angeordnete zweite Welle (3) angeordnet ist, die mit der Welle drehmomentübertragend gekoppelt wird und die zweite Welle (3) zumindest zwei Zusatz-Mittel angeordnet sind, die mit einem Zusatz-Messmittel derart wechselwirken, dass ein Signal im Messmittel (7) entsteht, wenn das Zusatz-Mittel am Zusatz-Messmittel vorbei bewegt wird.

9. Anordnung (9) nach Anspruch 8,
wobei vier Zusatz-Mittel an der zweiten Welle (3) in der 12-, 3-, 6-, 9-Uhr-Positon angeordnet sind,
wobei ein weiteres Zusatz-Positionsmittel (11) zwischen zwei Zusatz-Mitteln angeordnet ist.

10. Anordnung (9) nach Anspruch 8 oder 9,
wobei das Zusatz-Messmittel als Key Phaser ausgebildet ist.

11. Anordnung nach einem der vorhergehenden Ansprüche,
mit einer Auswerteinrichtung, die die Signale des Messmittels (7) und/oder das Zusatz-Messmittel erfasst,
wobei die Auswerteinrichtung derart ausgebildet ist, dass ein Differenzwinkel als Ausgangssignal bereitstellt.

12. Verfahren zur Ermittlung der Geschwindigkeit und des Winkels zwischen einer ersten (1) und zweiten Welle (3),
wobei auf der ersten (1) und zweiten Welle(3) mehr Mittel (6) angeordnet werden, die mit einem Messmittel (7) derart wechselwirken, dass ein Signal im Messmittel (7) entsteht, wenn das Mittel (6) am Messmittel (7) vorbei bewegt wird.
